# EUROPEAN PATENT APPLICATION

(11) **EP 4 207 092 A1**
(43) Date of publication of application: **05.07.2023**
(21) Application number: 21218056.6
(22) Date of filing: 29.12.2021
(51) Int. Cl.: G06V 10/24, G06T 7/33, G06V 30/424

(54) **A SYSTEM AND A METHOD FOR CATEGORIZING A PRODUCT OR PACKET**

(71) Applicant: TriVision A/S, 5000 Odense (DK)
(72) Inventor: Neckelmann, Ole K., 5000 Odense (DK); Gramkow, Claus, 5000 Odense (DK)
(74) Representative: Inspicos P/S

(57) **Abstract**

A system and a method for categorizing a product having a marking, such as a 2D bar code. First images are provided of the sides of the product and a first image with the marking is identified. For each category, a reference image with the marking is identified. From the identity of the image and reference image with the markings, a reference image, for the pertaining category, is identified for each image, and the images are compared to arrive at a categorization of the product. The product may be a drug provided in a box.

## Description

The present invention relates to a system and a method of categorizing a product or packet based on images of the sides thereof, and in particular to a swift method of providing yet a rather thorough categorization of the product or packet.

Relevant technology may be seen in US2014/052555, US10846552, US2007/158417 and "Bar-code recognition system using image processing", emerging technologies and factory automation proceedings, 1997, ETFA '97, 6th international conference on LA, CA, USA, IEEE, US, 9 September 1997, pp568-572.

In a first aspect, the invention relates to a method according to claim 1.

In the present context, the method may be carried out by the system described further below.

The product preferably is box-shaped or comprises a box or container. Preferably, the product has a number of surface portions, such as sides. Often, a box or container may comprise a predetermined number of sides, such as 6 sides.

The product has a marking which may be determined from an image. The marking may be a visible marking, such as a logo, sticker, water mark, or a bar code, such as a 2D bar code. Preferably all products of relevance or a number thereof have the same marking or similar markings, so that the marking may be identified across products from different categories with different markings.

A marking may have a recognizable colour, position, shape, contents or the like. The marking preferably is a bar code, as many products across categories comprise bar codes.

The marking may have an outline which is predetermined or which is within predetermined boundaries, such as a logo having a maximum size. A marking may e.g. not be text based and be recognizable in that context.

A logo often is recognizable due to it being coloured, where text may be in black/white. Also, a logo may have a colour or colours different from other colours of the product, so that the logo may be determined in that manner.

The marker may be as simple as a coloured dot or area which would preferably be present in or on all products.

A visible marker may be visible only under certain circumstances. Thus, the marker may be a water mark or hologram, or a fluorescent portion of the surface, or an element outputting radiation outside of the visible spectrum. Thus, a camera, but preferably each camera, may be adapted to determine or detect the marking.

At present, the marker preferably is a bar code, such as a 2D code, as bar codes may represent different information but are nevertheless recognizable in images.

The method comprises providing an image, a first image, of one, two or more surfaces of the product. In order to allow the product to have any angular position or at least a number of angular positions, the providing of the image may comprise providing an image of each surface of the product.

If the product has 6 surfaces or sides, 6 first images may be provided. Clearly, a single camera may image more than one side, so that a single image may represent multiple sides of the product.

Having provided the first images, the image which represents the marking of the product is identified An image represents the marking, if the marking may be detected, identified, determined or seen in the image. The image may be especially adapted for determining the marking, such as when the image is provided by a camera configured to sense a wavelength output (emitted, reflected or the like) by the marking when outside of the visible wavelength interval.

From the identified image, it may be determined on which side of the product the marking is provided, such as if a relative position of the product and a camera or the like having generated the image, is known. Clearly, a product may be oriented in different manners while maintaining a side with the marking oriented toward or visible by a particular camera. Thus, the orientation of the product vis-à-vis a predetermined coordinate system, such as vis-à-vis one or more cameras, a conveyor or the like, may be determined.

For each category of the plurality of categories, a reference image is provided of one, two or more, such as each surface of a pertaining reference product or product category. The reference images may be provided of actual products determined or selected as a reference product, or the reference images may be generated independently of actual products, such as from drawings, models, designs, or concepts of products or packets for products.

In each category, one of the reference images comprises a representation of a marking. This representation may be a visible indication of the marking. However, alternatively, information may suffice as to the position of the marking in the pertaining reference image. If multiple elements of the products may be mistaken as markings, the representation may additionally describe the marking to a degree so that it may be determined in the images and so that other elements in the images may be discarded as markings.

Having now identified which first image represents the marking, the first images may be compared to the reference images of a category - such as those of all categories or a number thereof.

Then, for each first image and for each category, one of the reference images of the pertaining category is identified based on the identified one of the first images. Clearly, it is desired that corresponding sides of the product and reference product are compared, if the product is of the same category. Knowing the relative positions of the portions represented in each image and, in the reference images allows the images and reference images to be "paired".

For example, if the product and reference products are box-shaped or dice-shaped, six sides are present, one having the marking. Thus, the sides having the marking may easily be identified and paired, as may the sides opposite to the sides having the marking. The products may now be represented more similarly by rotating the product, if not already in this position, to have the side with the marking point in the same direction as the side of the reference product having the marking. However, even with the side pointing in the right direction, the orientation of the product may vary, so that the image taken from another direction may not show an expected other side of the product. Therefore, not only is the side with the marking identified, or the image of this side, but also the orientation.

If the marking is not rotationally symmetric or rotationally symmetrically positioned on the surface of the product, also the rotational relationship between the product and reference product may be easily determined around an axis through the side having the marking. Then, the product may be rotated around this axis to have the same rotational relationship as the reference product/image, so that the corresponding having the markings point in the same directions and so that the markings are positioned similarly on these sides.

The marking may be defined for each category, such as a tradename particular to that category. Then, the processor will search for the different markings in the first images. Alternatively, the markings of all categories may have common particulars which allows the controller to identify a marking without at least partly determining also a category. In one example, the common type marker may be a bar code, such as a 2D bar code, a water mark. a logo, a coloured area, a marking of predetermined dimensions, or the like.

In the situation of a dice, the markings may be a marking around an extreme dot of the side representing the number 3. This marking is not positioned rotationally symmetrically on that side of the dice. Thus, the reference dice may be selected to have the "3" side pointing up and the "6" side pointing to the right. Then, the "4" side points down and the "1"-side to the left. The "2" side would be pointing toward the spectator and the "5" side would be pointing away from the spectator.

The images of the dice, being in the same category, would represent the same sides, and the side representing the "3" side would also have a marking around an extreme dot on the "3" side and would thus be identified as that representing the marking. The dice may now be rotated so that the "3" side points up. The marking around the extreme dot may now be identified and the dice rotated, still with the "3" side pointing upwardly, until the marking is at the same corner of the "3" side as the reference dice. In this situation, the dice will now also have the "6" side pointing to the right, the "4" side pointing down, the "1"-side pointing to the left, the "2" side pointing toward the spectator and the "5" side pointing away from the spectator.

Thus, from the identification of the image representing the marking and knowledge of the orientation, the dice may be rotated to correspond to the rotational position of the reference dice.

Then, the comparison of the sides is easier, the dices are now oriented in the same manner, so that it is known which images relate to the "2" sides and so on. Then, the "2" sides of the product and the reference product may be easily identified and compared, as may the respective "1", "4", "5" and "6" sides.

Reverting to the overall invention, clearly, the actual rotation is not required, as it may be determined which first image should be compared to which reference image, merely from which first image represents the side with the marking and which reference image represents the marking as well as knowledge of the orientation of the product compared to a desired or reference orientation of the product. This orientation may be determined as a rotational relationship between the position of the marking in the first image and the corresponding reference image.

From the identification of the first image representing the marking, the remaining images may be paired with corresponding reference images of the individual categories.

Each first image is then compared with a reference image determined on the basis of the image determined to represent the marking and the orientation thereof.

Based on the comparisons, it is determined to which category the product belongs.

In one embodiment, the reference images of a category represent images of the category or a product of the category representing different sides or surfaces of the product/category, where the sides/surfaces are at predetermined relative positions, angles or directions in relation to each other, such as images of 6 sides of a box are at predetermined positions, angles/directions to each other. Thus, the orientation of a surface may be a direction thereof, such as a direction perpendicular to a plane of the surface, such as relative to predetermined directions or planes, such as vertical, horizontal, a direction of movement of the product vis-à-vis e.g. the earth or the camera(s).

In a particular embodiment:
- a first first image represents a side surface of the product pointing in a first direction,
- a second first image represents a side surface of the product pointing in a second direction,
- a third first image represents a side surface of the product pointing in a third direction,
- a fourth first image represents a side surface of the product pointing in a fourth direction,
- a fifth first image represents a side surface of the product pointing in a fifth direction, and
- a sixth first image represents a side surface of the product pointing in a sixth direction,
where all directions are 90 degrees or 180 degrees to each other.

In this situation, a category may comprise a first, a second, a third, a fourth, a fifth and a sixth reference image each representing the category or product viewed from one of the six directions.

The product may be arranged or positioned, vis-à-vis the camera(s) so that surfaces thereof are in the desired directions. This facilitates comparison of the images but is in general not absolutely required, as any direction variation may be corrected by correcting the corresponding image in a processor.

In general, from the identification of the first image representing the marking, and from knowledge of which of the reference images represents the marker, it may be determined in which direction, a reference direction, the side surface of the product with the marker should be pointing.

The direction may be determined by the particular reference image representing the surface representing the marker as well as a rotational direction of this surface in the particular reference image.

It may then be determined how the product should be re-oriented in order to have the side surface with the marking pointing in the same direction as that of the reference image representing the marking. If the product was re-oriented in this manner, not only can the first image be compared to the reference image representing the product/category viewed from the first direction, but now also the remaining surfaces of the category/product are correctly oriented in relation to the corresponding reference images so that an easy comparison is performed.

Instead of this physical rotation, it is decided which one of the first images is to be compared to which one of the reference images. It is also determined whether any of the first images and/or any of the reference images is to be rotated, and, if so, rotated how much, before the comparison. This determination of which first image to compare to which reference image and whether to rotate or not is determined based on which first image represents the marking and which reference image represents the marking and whether the first (and/or reference) image is to be rotated.

Often, the determined re-orienting may be seen as a rotation around one or more axes perpendicular to side surfaces of the product. When the product is box-shaped (has 6 sides perpendicular or parallel to each other), a rotation of 90, 180 or 270 degrees will rotate the sides through which the axis extends but will require that the 4 other surfaces are re-directed to point in other of the directions so that the first images thereof are to be compared to others of the reference images. In this process, it may be desired to also rotate a first image before comparing to the correct reference image. Clearly, a rotation may be 0 degrees.

Thus, the determination of the orientation will determine which first image(s) (and/or reference image(s)) to rotate. In addition to a rotation, it may be determined which first image(s) to compare to which reference image(s).

As mentioned, the step of identifying the image with the marking may comprise determining a position, on the surface of the product and/or in the image, of the marking; and wherein the identification of each reference image is based also on the determined position. As mentioned, the same surface may be visible in an image where the product has multiple angular positions. However, if the marking is not rotationally symmetric or symmetric at least when rotated 180 degrees, 90 degrees and/or 45 degrees, the rotational position of the product may be determined from the rotational position of the marking alone. In addition, or alternatively, if the marking is not positioned at or around a centre of the product, the rotational position of the product may be determined from the position of the marking alone.

Comparing two images to each other is a known task. Comparisons may be performed in a number of manners. In one situation, the image and the corresponding reference image are each sub-divided into portions, where one or more portions of the image are then compared to corresponding portions of the reference.

Comparison may be pixel-to-pixel or more general. A comparison may be a comparison of a colour, a mean colour or light intensity of the image or portion, a colour distribution in the image or portion, and/or a light distribution over the image or portion, for example. A colour difference may be quantified by a difference in colour density, such as a difference in radiation at a particular wavelength or within a particular wavelength interval output from the product or present in the image/portion.

Comparison may alternatively or additionally be a comparison of text in the image(s). Thus, text recognition may be employed to decipher the text in an image and the corresponding reference image, to be able to compare the texts. Alternatively, or additionally, the images or the portions comprising the text may be directly compared, pixel by pixel or pixel-group by pixel-group (such as areas having a surface area on the product of no more than 1mm², such as no more than 0.5mm², such as no more than 0.1mm², such as no more than 0.05mm², such as no more than 0.01mm²). The latter method is feasible especially when a high correspondence between the images is expected.

Discrepancies in text may be quantified by how many letters do not correlate - or the combined area in which no correlation has been found, for example.

Comparison may be a comparison of the whole image or portions only therein. An image or product surface may be sub-divided into more relevant portions and less relevant portions.

In one situation, a logo or other element is considered a more relevant portion and may be identified to take part in the comparison.

Two logos may be compared by comparing a mean colour, colour distribution, size, position, or the like.

Logos may be allowed to differ slightly in colour, such as if products or packages of different age are compared. On the other hand, a difference in logo colour could be an indication of a copy product and may thus result in the product being categorized differently than authentic products.

A position of a logo may be determined, such as a centre of the logo or one or more positions of identifiable portions of the logos. A displacement of a logo may be allowed, if the displacement is between the image and the reference image. If the displacement is a displacement relative to other portions of the product in the image, such as other logos or text, this may be flagged, as the product may then be a copy or of a different batch. Often, the packages of products are made in a printing facility where the printing is made in a wellcontrolled step but where there need be a precise registering between the printing step and the cutting step. Thus, the position of a logo, for example, on the packet may vary slightly, but no displacement is expected or allowed (only within very small limits) between different printed elements on the same side of the product.

A displacement may be quantified merely by its size in mm or µm - or pixels.

Based on the comparisons, the categorization may be made. As the images are compared to references from multiple categories, the differences may be quantified and that category may be selected which has the fewest or smallest differences to the images.

If no similar category is seen, a new category may be defined with the images as reference images for that category.

As mentioned, in one embodiment, the comparison comprises identifying and comparing relevant portions of the pertaining image and the identified reference image of the pertaining category. Then, irrelevant portions of the images may be ignored or allocated a lower weight in the determination of the comparison or similarity.

In one situation, the comparison comprises identifying and comparing a logo of the pertaining image and the identified reference image of the pertaining category. Then, the comparison could comprise identifying and comparing a position and/or colour contents of the logo of the pertaining image and the identified reference image of the pertaining category.

In general, the comparing step may comprise rotating one or more images a predetermined number of degrees, based on the identified one of the images, prior to the comparison. When a first side of a box is imaged from a first side, text thereon, for example, may be directed horizontally with the letters oriented as usual letters. Rotating the box 180 degrees around an axis parallel to the surface with the text and along the direction of the text will bring the text to an opposite side of the box. This opposite side may be viewed by a camera position so as to view that side. Now, however, the text is upside-down. Then, to compare an image of this side with this orientation, the image of the side may be rotated 180 degrees in order to bring the text back to the original state, whereby the two images may be compared to find the images correspond.

It may be desired that all images and reference images are oriented in the same manner, as this greatly facilitates comparison.

It is noted that box-shaped products may also, even when a surface is resting on a horizontal surface, be rotated 90 degrees, as would be seen when the product is rotated round a horizontal axis through two sides of the box. These sides may be rotated 90 degrees when the product is rotated from resting on one side and to resting on an adjacent side. Thus, some images may be desired rotated 90 degrees.

These rotations may be determined from the identified image representing the marking, as this would define a rotation which would be required to bring the marking into the side of the reference images. From this rotation, not only which image is to be compared to which reference image may be determined but also a rotation of each or some images which would be required to bring that image on to the rotational state of the corresponding reference image.

In a second aspect, the invention relates to a system according to claim 7.

Clearly, the aspects of the invention as well as the embodiments, situations, means and steps may be interchanged if desired. The above and below definitions are equally valid for all aspects of the invention.

In this context, the system may be a single system provided at a single location. Alternatively, the controller may be positioned, or part of the controller may be positioned, remotely from the cameras.

A product may be any type of product, such as a food product, a medication, a piece of clothing, an accessory or the like. The product may be box-shaped or may comprise a box inside which the actual product is provided.

The product has a marking, as described above. The marking may be provided on a surface of the product and/or box.

Two or more surfaces of the product, preferably all surfaces of the product, are imaged. A camera may view one or more sides of the products, so the number of cameras used may vary depending on the set-up. Even opposing sides may be viewed by the same camera, if mirrors or the like are used.

It may be preferred to provide one first image of each side of the product. This makes image manipulation easier, as some first images may be desired rotated before the comparison is performed.

The controller may be any type of controller, such as an ASIC, processor, DSP, FPGA or the like, software controlled or hardwired. Naturally, the controller may be divided up into a number of elements communicating with each other. The controller may comprise a storage if desired. The controller, or parts thereof, and/or the storage may be provided in the vicinity of the cameras or remotely therefrom. Embodiments exist in which the controller or portions thereof are provided remotely, such as in the cloud.

The camera(s) and controller are capable of communicating with each other. This communication may be wired or wireless, may be direct or via other elements, such as antennas, switches, routers, the www or the like. The camera(s) may be capable of preprocessing the images before feeding to the controller, such as by removing portions of images not relating to the product and/or performing scaling, colour correction or the like.

The camera(s) will be positioned at a distance from the pertaining side(s) of the product. If this distance varies from product to product, comparison of two images of the same product but obtained at different distances, preferably includes a scaling of at least one of the images for the images to correspond. This would make comparison easier.

For that reason, each side is preferably imaged by a separate camera, which is positioned with a predetermined distance to the product. In that manner, the products may be transported past the cameras, so that a large number of products may be categorized.

In that set-up, the products may be positioned suitably vis-à-vis the cameras sequentially or for a number of the cameras at the same time. The products may be positioned first at a predetermined position vis-à-vis a first camera and then at a second position vis-à-vis a second camera, so that differently sized products may be imaged.

When the camera(s) take(s) images from a predetermined distance, no scaling need be made, or the same scaling may be made. This scaling, if desired, may be made in the camera or in the processor. However, it may be desired to allow the distance from a particular surface, such as a surface opposite to that on which the product rests, to a camera to vary. In this situation, a scaling may be desired to take this distance variation into account.

Clearly, also the illumination of the product may be of interest. The illumination preferably is uniform over all of the product, but this may not be possible. An uneven illumination may be determined and the image(s) corrected correspondingly. This correction may be the same for all products and may then be made in the controller or the pertaining camera.

The controller is configured to identify one of the first images which represents the marking of the product. Thus, the controller may be configured to analyse all first images of the product and identify the marker. Image analysing products exist that are optimized to identify a predetermined element in an image. As mentioned above, the marker may be a logo or the like but is preferably a bar code, such as a 2D bar code. Such markers are easily detected in an image.

A plurality of categories exists. It is desired to determine to which category the presently imaged product belongs. For each category a number of reference images are provided. Preferably, the reference images relate to some or all of the sides of the product so that a reference image corresponds to an image of a product of the same category. The reference images of a category may be of a reference product, or the reference images may be provided from e.g. printing files (like PDF, DXF format etc.) for a box of the product.

The controller is then configured to identify, for each category or for at least some of the categories, based on the identified one of the first images (representing the marking), one of the reference images of the comprising a representation of a marking. It is noted that the markings of the images and the reference markings need not be identical. It is very likely that a marking of a product of another category may be positioned differently on a side of the product. Preferably, however, the markings of all categories are sufficiently similar for these to be identified and recognized.

Having identified the first image representing the marking and the reference image representing the marking, a reference image, of the pertaining category, may be identified for each image of the product, and these pairs of a reference image and an image may now be compared. The determined orientation and rotation is described further above.

Based on the comparisons across the categories, it is now determined to which category the product belongs. Categorization and comparison are described further above.

In one embodiment, the system further comprises a storage comprising the reference images. This storage may be positioned close to the controller. Alternatively, the reference images may be stored remotely, such as in a central database. In that manner, the reference images may be controlled by a supervising authority, which may also add new categories if desired.

In one embodiment, the controller is configured to have the step of identifying the image with the marking comprise determining a position, on the surface of the product, of the marking and wherein the identification of each reference image is based also on the determined position. As described above, this position and/or marking may not be rotationally symmetric so that a rotation of the product may be determined to bring the product to a rotational position similar to that of the reference product according to the reference images. Thus, this position may take place in the determination of which first image corresponds to which reference image.

In one embodiment, the controller is configured to have the comparison comprise identifying and comparing relevant portions of the pertaining first image and the identified reference image of the pertaining category. Then, less relevant or irrelevant portions may be ignored.

In one embodiment, the controller is configured to have the controller perform the comparison in a manner so that the comparison comprises identifying and comparing a logo of the pertaining first image and the identified reference image of the pertaining category. Products usually have logos, and it may be decided to allow product categories only for products having logos.

Then, the controller may be configured to perform the comparison so that the comparison comprises identifying and comparing a position and/or colour contents of the logo of the pertaining first image and the identified reference image of the pertaining category.

In general, the controller may be configured to have the comparing step comprise rotating one or more first images a predetermined number of degrees, based on the identified one of the images, prior to the comparison. This is described above.

Also, the system may further comprise:
- an initial conveyor transporting the plurality of the products in a sequential manner, and
- a distancing element configured to ensure a minimum distance between adjacent products in the direction of the conveyor.

The distancing element may be an element delaying one product, if it is too close to another product in front of the product along the direction of movement. Delaying may simply be to prevent the latter product from moving forward.

Another type of distancing element comprises 2 conveyors which may be operated at different speeds. Then, if a larger distance is desired, the latter conveyor, which the product arrives at before the earlier conveyor, may move at a higher speed, so that a larger distance is obtained between adjacent products.

Preferably, one camera is provided for acquiring a first image of each side of the product. This has the advantage that the imaging of individual sides of the product may be independent of each other so that optimal first images may be provided of each side.

In the following, preferred embodiments are described with reference to the drawing, wherein:
- Figure 1 illustrates a system for providing first images of boxes,
- Figure 2 illustrates how to ensure a desired distance from box to camera,
- Figure 3 illustrates the images taken and a canonical or ordered image set

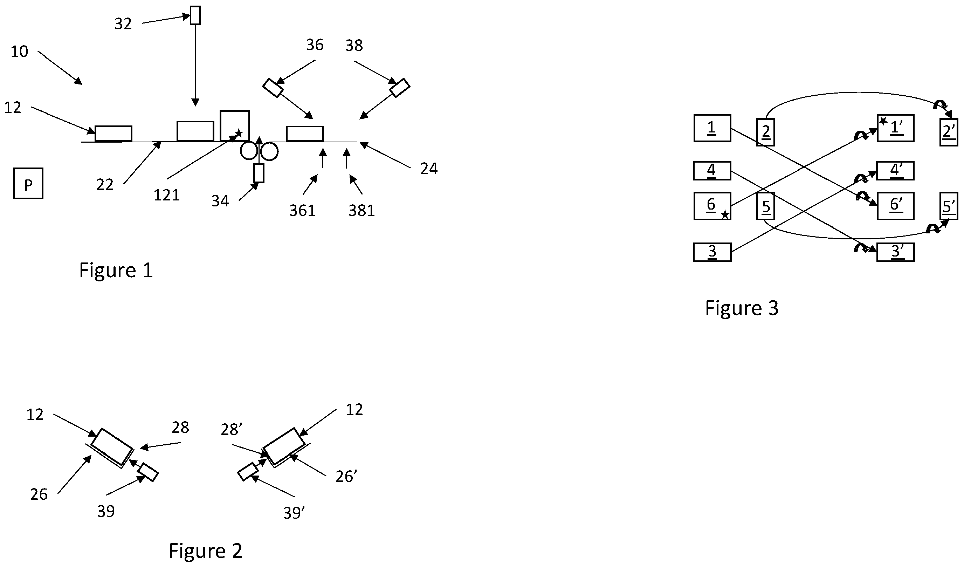

In figure 1, a system 10 for providing first images of boxes or products is seen where boxes 12 are fed along one or more conveyors 22/24 and past a number of cameras.

The operation of the system is to classify the boxes into predetermined classes. The classification is performed based on the first images of the boxes. The boxes preferably comprise a predetermined mark or label 121 which may be identified and perhaps deciphered and be used in the classification. In another embodiment, the position of the mark/label 121 may be used in the determination, such as to provide a canonical image of the box to ease the classification (see further below).

An issue with classification is that classification may be performed on minute details of the boxes, so that high resolution first images are required. Also, allowing the boxes to have one of many rotational positions on the conveyors, increases the complexity of the analysis. In the present embodiment, the boxes are supported by the conveyor and are directed so as to have surfaces thereof extending in the direction of travel. In this manner, the boxes will have a lower surface, an upper surface, a leading surface, a trailing surface and two side surfaces.

A camera 34 is provided below the conveyors or between two conveyors, 22, 24, along which the boxes are transported so as to provide a first image of the boxes from below.

A camera 32 is provided above the conveyor(s) in order to provide a first image of the boxes from above.

Cameras 36 and 38 obtain first images of the, trailing and leading, end faces, respectively of the boxes. The cameras 36 and 38 may be controlled by one or more sensors, 361/381, which sense presence, passing or arrival of the boxes. This sensor may be used for triggering the cameras so that a predetermined distance exists between camera and leading/trailing surface when the first image is provided.

In order for the cameras 36 and 38 to be able to view the complete surfaces of the boxes, a minimum distance may be required between adjacent boxes to prevent one box from occluding or shadowing for another box. Many manners exist for obtaining a minimum distance, such as a simple speed difference between the conveyors 22 and 24. If the conveyor 24 moves faster, a larger distance will be obtained between adjacent boxes. A sensor may be provided, and the speeds controlled so that the distance between adjacent boxes may be controlled so as to not be excessive, such as if the boxes on the conveyor already had a sufficient distance between them. It may also be desired to not have a too large distance between boxes as this may reduce the number of boxes analysed per unit time. Thus, sensors may be provided at the conveyor 22 to determine an existing distance between adjacent boxes, so that this may be adjusted if desired.

A processor (P) is provided for receiving first images or data from the cameras, for controlling the conveyor(s) and for performing the categorization. Clearly, the processor may be divided into multiple elements, all of or some of which may be remote, such as in the cloud. The below reference images may be stored remotely, such as in a storage common to a number of systems as seen in figure 1.

The side surfaces may be imaged by two cameras, 39 and 39', viewing the boxes from the sides. In order to ensure that the first images are of a high quality, the distance from each camera to the pertaining side surface is desired controlled with high precision. In one embodiment, the box may be provided at or even biased toward a surface defining the distance to the camera. This may be obtained by providing a conveyor 26/26' (see figure 2) with an angle to vertical so that the box slides downward toward a support surface 28/28', where a camera 39/39' may then obtain the first image through the surface 28/28' or through an opening therein. The conveyor 26/26' may be adapted to obtain the angle illustrated to have the box slide and then have a shallower angle (to horizontal) so that the packet remains in the position, relative to the conveyor, and does no longer slide. In that manner, the surface 28/28' is not required at the position of the camera 39/39'. Clearly, as is seen in figure 2, both side surfaces may be imaged, such as sequentially, in that manner.

Naturally, the sides of the box may alternatively be imaged by a sequence of cameras all directed, relative to the conveyor, as one of the cameras 32, 34, 36, 38, 39 and 39', such as camera 34, by imaging one side and then sequentially rotating the box to have another side face toward the cameras and move the box over or past the next camera. This may be repeated for all sides if desired.

When a distance from a camera to the imaged box surface is fixed, the first image does not need a lot of post processing, such as a scaling, which makes the process faster.

For the camera 32, boxes of different heights may require an image processing. A taller box, or a surface at a larger height, will seem larger than the same surface of a not so tall box or a surface at a lower height. Thus, a plurality of identical, not cube-shaped boxes may vary in which side is directed upwardly and thus the height of this surface above the conveyor. This may be compensated for by determining a height of the surface imaged by the camera 32 and compensating the first image to arrive at an image with the same proportions as if the side was imaged by one of the other cameras or a camera at a predetermined distance from the conveyor. Camera 32 may be positioned at a sufficient height over the conveyor and may be equipped with suitable optics so that boxes with heights within a desirable interval may be imaged in focus. Alternatively, variable focus optics may be provided.

At one or more, such as each, camera, one or more illuminating elements, such as LED lamps, may be provided for ensuring a predetermined illumination of the surface when the image is provided. Image comparison is easier when the image is provided under sufficient illumination and even easier when the images are provided under the same illumination conditions, as different illumination will result in the same element of the surface, such as a logo, may seem to have different colours, which makes comparison more cumbersome.

However, as images from one camera should be compared to images taken by other cameras, it is desired that the illumination at each camera provides at least the same illumination (colour temperature and/or light intensity), so that images may be readily compared. Alternatively, a correlation may be derived from images from one camera to images of another camera, so that an image from one camera may be compensated to correspond to an image of the same object or surface taken by the other camera. A correlation may also take into account uneven illumination of the surface and differences in illumination caused by differing distances from the surface to the camera and/or illuminating means, such as could be the situation for the camera 32. Also differing lighting conditions may be experienced during the providing of images, such as if sunlight is able to enter the facility or if artificial light is turned on and off. This may be detected and compensated for.

Having now obtained first images of all sides, the first images may be analysed and the boxes categorized.

After categorization, the conveyors may transport the boxes to a sorting facility (not illustrated) where boxes of different categories are fed to different containers.

In one example, the boxes comprise medication, such as blister packs or the like. Different boxes may comprise different medication, different numbers of doses, different dose sizes of medication, or the like. Different boxes may comprise medication with different shelf life or boxes with text in different languages.

Even the exact same medication (the same dose size and number of doses in the box) may be desired categorized differently, such as when the shelf life or an expiry date varies.

For example, different lot numbers may be categorized differently.

Thus, the information on the box may require scrutiny in order to categorize the box. This makes high resolution and high precision imaging desirable.

In addition, high speed categorization is desired, so a swift analysis and categorization is desired.

A box may be categorized with reference to other, identical or sufficiently similar boxes or images thereof. However, as the boxes may be oriented differently, the comparison may be facilitated if images of the same side(s) of the boxes are compared.

To arrive at this, a predetermined marking or element, such as a logo, bar code or the like, is identified in the 6 first images of the box. From the identity of the first image or camera as well as the position of the marking on the box, the orientation of the box may be determined. From this orientation, it may be determined which camera imaged which side and thus which image represents which side of the box.

In figure 3, the 6 first images, 1, 2, 3, 4, 5 and 6 of the 6 sides of the presently imaged box are illustrated. The image number may be as that of a dice, so that opposite sides are 1&6, 2&5 and 3&4. Thus, cameras 36 and 38 may generate first images 2 and 5, cameras 32 and 34 may generate images 1 and 6 and the cameras 39/39' of figure 2 may generate images 3 and 4.

It is seen that the marking, in the present rotation, is seen in first image 6, in the lower, right corner. The image 6 may be generated by the camera 34, so that the box is presently oriented so that the marking is in the lower surface.

For boxes of each category, references images 1', 2', 3', 4', 5' and 6' are generated. In the reference images, the marking may be present in image 1', and in e.g. the direction of travel of the conveyor. Thus, for the category to which the packet from which images 1-6 have been derived, the marking should be in the upper, left corner of image 1'. Thus, here the marking would be generated by the camera 32, so that the box was oriented to have the marking on the upper surface. Clearly, merely comparing image 6 of the present box image 6' of the reference images would be undesired.

Compared to the box imaged in or represented by the images 1'-6', the present box thus is rotated 180 degrees along an axis through the surfaces in images 2 and 5. This rotation would bring the side with the marking to face the camera providing image 1. It is noted that the camera 32 views the surface from above and not below, so that the marking will be in the left corner and not the right corner.

If the marking in image 6 was instead in the upper, left corner, both a rotation along an axis through sides corresponding to images 2 and 5 and a rotation along an axis through the sides 1 and 6 was required.

Thus, image 6 is to be compared to image 1' but now rotated (180 degrees). Thus, the images 1-6 are compared to images 1'-6', or rather images 6', 2', 4', 3', 5' and 1', respectively, and then rotated in the same manner as if the box was rotated to have the correct image or camera view the correct side (with the marking) and with the correct rotation.

Having then rather simply and swiftly determined which of images 1-6 is to be compared to images 1'-6' of one or more categories, the individual images may be compared to its counterpart.

Naturally, a canonical image may be generated from images 1-6 and images 1'-6', so that a single image is formed from all of images 1-6 which is compared to a single image formed of images 1'-6'. Then, a single image comparison is required. This single image may be formed by the images 1-6 by combining these, such as by assembling these into a single image. The single image of images 1'-6' may be formed by the images, or portions thereof representing the sides, positioned with predetermined relative positions. Then, the single image based on images 1-6 would be with the same predetermined positions but taking into account the rotation of the box, so that the positions would be that, in the example of figure 3, where images 1-6 are compared to images 6', 2', 4', 3', 5' and 1', of the images 1-6 re-arranged as determined by the position of the marking.

For any image, when the distance from the camera to the box side is well known or even standardized in the set-up, a scaling may not be required to bring the images of the corresponding sides to be identically sized, so that a direct comparison, perhaps down to pixel-by-pixel may be performed.

Images may be compared in a number of manners. A number of tools are readily available.

A number of operations may be employed in order to facilitate or make the comparison easier, faster or more predictable.

In one embodiment, a scaling is performed to have an outline or the like of one of the images 1-6 fit that of the corresponding image of 1'-6', before the comparison is made. Alternatively, a general scaling may be performed, such as if the set-up is sufficiently stable to allow this. When fixed optics are used with the camera together with a fixed distance between camera and surface, no scaling may be required.

In that or another embodiment, a colour correction is made of one or more of the images 1-6, before the comparison is made. A colour variation may be seen due to fading of the box, such as if the package is of age or has been exposed to e.g. sunlight over extended periods of time. Aging and extended exposure to sunlight may alter the colour of the box material, often to become more yellow or darker.

Areas in the images may be identified which are not expected to have print or the like and which are assumed to be of a particular colour, often white. It may then be determined whether this area has the expected colour. Alternatively, it may be assumed that this area has the correct colour so that a correlation between the actual colour and the expected colour may form the basis of the compensation.

Thus, the images may be compensated by varying the light intensity of the images.

Areas in the images may be identified which are not expected to have print or the like and which are assumed to be white or have a particular colour. A correlation between the actual colour and the expected colour may then be determined and the image colour corrected to arrive at at least substantially the expected colour of the portions in question.

In other situations, colour variations, such as in logos, may be taken as a warning, so that images of one packet are not compensated but so that the packet is assumed to belong to a different category or is fed to an operator for manual categorization or introduction as a new category.

In one situation, some portions of the image of the side may be more important than others in the categorization. Naturally, spaces assumed or expected to be blank are easily checked for correspondence thereto, whereas portions with logos or text, such as medication name, dose size, expiration date, shelf life, and the like may be much more important to arrive at a good characterization.

Thus, the comparison may be simplified by dividing one or more of the reference images into more important and less important portions, where a lighter comparison or more variation is accepted in the less important portions. Less important portions may be portions of the same colour. More important portions may be text portions, logos or the like.

Clearly, multiple sides may be imaged by less cameras, such as when imaged from an angle to each of the sides, so that fewer cameras need be used.

The present system may be used e.g. in a system in which medications or drugs are to be checked, accounted for or even re-packaged. In this manner, the medication packages need to firstly be categorized and determined. In this situation, the marking may be a bar code or a 2D bar code. 2D bar codes comprise both a portion identifying the medication type and a portion being a (non-sequential) number, so that each medication package is unique. This may be used for proving or identifying copied medicine.

Having detected a medication package, the ID thereof, including the sequence number, may then be reported to a central database, so that this package is "removed from the market", where after the contents of the package may be consumed or repackaged into another package with fewer or more doses of the medication. Such a new package may then be scanned and entered into the central database as "entering the market", so that it may be tracked. In this manner, all medication may be tracked from production until delivery to a patient (at which point in time the medication will be marked as "removed from the market").

## Claims

1. A method of categorizing a product having a marking, the method comprising:
- providing, by one or more cameras, a first image of each of two or more surfaces of the product,
in a controller:
- providing, for each category of a plurality of categories, a reference image of two or more surfaces of a pertaining reference product, one of the reference images of each category comprising a representation of a marking,
- identifying one of the first images representing a surface of the product having the marking,
- determining an orientation, relative to a predetermined coordinate system, of the surface in the identified first image,
- rotating each of the first images a predetermined number of degrees, based on the identified first image and the determined orientation,
- subsequently to the rotation, for each of the first images and for each of a number of the categories:
- identifying, based on the identified one of the first images and the determined orientation, one of the reference images of the pertaining category,
and
- comparing the first image to the one of the reference images of the category identified based on the first image, and
- based on the comparisons, determining to which of the plurality of category the product belongs.

2. A method according to claim 1, wherein the step of identifying the first image with the marking comprises determining a position, on the surface of the product, of the marking and wherein the identification of each reference image is based also on the determined position.

3. A method according to any of claims 1 and 2, wherein the comparison comprises identifying and comparing relevant portions of the pertaining first image and the identified reference image of the pertaining category.

4. A method according to claim 3, wherein the comparison comprises identifying and comparing a logo of the first image and the identified reference image of the category.

5. A method according to claim 4, wherein the comparison comprises identifying and comparing a position and/or colour contents of the logo of the first image and the identified reference image of the category.

6. A method according to any of claims 1-5, wherein:
- a first first image represents a side surface of the product pointing in a first direction,
- a second first image represents a side surface of the product pointing in a second direction,
- a third first image represents a side surface of the product pointing in a third direction,
- a fourth first image represents a side surface of the product pointing in a fourth direction,
- a fifth first image represents a side surface of the product pointing in a fifth direction, and
- a sixth first image represents a side surface of the product pointing in a sixth direction,
- a category comprises a first, a second, a third, a fourth, a fifth and a sixth reference image each representing the category or product viewed from one of the six directions,
where all directions are 90 degrees or 180 degrees to each other.

7. A system for categorizing a product having a marking, the system comprising:
- one or more cameras configured to provide two or more first images, the first images representing two or more surfaces of the product having the marking,
- a controller configured to:
- provide, for each category of a plurality of categories, a reference image of two or more surfaces of a pertaining reference product, one of the reference images of each category comprising a representation of a marking,
- identify one of the first images representing the marking of the product,
- determine an orientation, relative to a predetermined coordinate system, of the surface in the identified first image,
- rotating each of the first images a predetermined number of degrees, based on the identified first image and the determined orientation,
- subsequently to the rotation, for each of the first images and for each of a number of the categories:
- identify, based on the identified one of the first images, a reference image of the pertaining category, and
- compare the first image to the one of the reference images of the category identified based on the first image, and
- based on the comparisons, determine to which category the product belongs.

8. A system according to claim 7, further comprising a storage comprising the reference images.

9. A system according to claim 7 or 8, wherein the controller is configured to have the step of identifying the first image with the marking comprise determining a position, on the surface of the product, of the marking and wherein the identification of each reference image is based also on the determined position.

10. A system according to any of claims 7-9, wherein the controller is configured to have the comparison comprise identifying and comparing relevant portions of the first image and the identified reference image of the category.

11. A system according to claim 10, wherein the controller is configured to have the controller have the comparison comprise identifying and comparing a logo of the first image and the identified reference image of the category.

12. A system according to claim 11, wherein the controller is configured to have the comparison comprise identifying and comparing a position and/or colour contents of the logo of the first image and the identified reference image of the category.

13. A system according to any of claims 7-12, further comprising:
- an initial conveyor transporting a plurality of the products in a sequential manner, and
- a distancing element configured to ensure a minimum distance between adjacent products in the direction of the conveyor.

14. A system according to any of claims 1-13, comprising one camera for each side of the product, where each camera is positioned so as to provide an image of a separate side surface.
